# EUROPÄISCHE PATENTSCHRIFT

(11) **EP 3 656 180 B1**
(45) Veröffentlichungstag und Bekanntmachung des Hinweises auf die Patenterteilung: **03.04.2024**
(21) Anmeldenummer: 18731398.6
(22) Anmeldetag: 11.06.2018
(51) Int. Cl.: H04W 88/04, H04W 84/18, H04W 76/14, H04W 4/46, H04W 16/14, H04W 88/06

(54) **ERSTE STRASSENSEITIGE NETZWERKEINHEIT UND VERFAHREN ZUM BETREIBEN DER ERSTEN STRASSENSEITIGE NETZWERKEINHEIT**
FIRST ROADSIDE NETWORK UNIT AND METHOD FOR OPERATING THE FIRST ROADSIDE NETWORK UNIT
PREMIÈRE UNITÉ DE RÉSEAU CÔTÉ ROUTE ET PROCÉDÉ DE FONCTIONNEMENT DE LA PREMIÈRE UNITÉ DE RÉSEAU CÔTÉ ROUTE

(30) Priorität: 18.07.2017 DE 102017212246; 13.10.2017 DE 102017218323
(43) Veröffentlichungstag der Anmeldung: 27.05.2020
(73) Patentinhaber: Robert Bosch GmbH, 70442 Stuttgart (DE)
(72) Erfinder: ECKERT, Kurt, 71254 Ditzingen (DE); KERMOAL, Jean-Philippe, 70839 Gerlingen (DE); HOFMANN, Frank, 31139 Hildesheim (DE)
(86) Internationale Anmeldenummer: PCT/EP2018/065304
(87) Internationale Veröffentlichungsnummer: WO 2019/015875

(56) Entgegenhaltungen:
- WO-A1-2014/048486
- WO-A1-2016/159712
- WO-A1-2017/052488
- DE-A1-102014 216 795
- DE-B3-102012 216 827
- FERRARI G ET AL: "Cross-network information dissemination in VANETs", ITS TELECOMMUNICATIONS (ITST), 2011 11TH INTERNATIONAL CONFERENCE ON, IEEE, 23. August 2011 (2011-08-23), Seiten 351-356, XP032064679, DOI: 10.1109/ITST.2011.6060081 ISBN: 978-1-61284-668-2
- MICHAILIDIS EMMANOUEL T ET AL: "Relay selection in V2V communications based on 3-D geometrical Channel modeling", 2016 10TH EUROPEAN CONFERENCE ON ANTENNAS AND PROPAGATION (EUCAP), EUROPEAN ASSOCIATION OF ANTENNAS AND PROPAGATION, 10 April 2016 (2016-04-10), pages 1-5, XP032906948, DOI: 10.1109/EUCAP.2016.7481945 [retrieved on 2016-05-31]

## Beschreibung

### Stand der Technik

Die Erfindung betrifft eine erste straßenseitige Netzwerkeinheit und ein Verfahren zum Betreiben der ersten straßenseitigen Netzwerkeinheit.

Es ist bekannt, dass bereits heute Fahrzeuge in der Lage sind, Informationen mit anderen Fahrzeugen in deren Nähe (V2V: Vehicle to Vehicle) auszutauschen. Auch können Fahrzeuge mit straßenseitiger Infrastruktur drahtlos kommunizieren (V2I: Vehicle to Infrastructure). Ebenso kann das Fahrzeug mit einem Backend-Server im Internet (V2N: Vehicle to Network) oder mit einem Fußgänger-Endgerät (V2P: Vehicle to Person) drahtlos kommunizieren. Diese Kommunikation wird insgesamt auch als Vehicle-to-Everything (V2X) bezeichnet. Die Entwicklung neuer Funktionen und Dienstleistungen in der Automobilindustrie wie beispielsweise automatisiertes Fahren profitiert von V2X. Verkehrssicherheit, Fahrkomfort und Energieeffizienz können verbessert werden. Dies führt zu neuen Produkten und Geschäftsmodellen für Autohersteller, Automobilzulieferer und andere Dienstleister.

Die erste Generation der V2X-Anwendungen, die in den kommenden Jahren eingesetzt werden soll, ist hauptsächlich auf die Anwendung auf der Straße bezogen. Ihr Ziel ist es, dem Fahrer Informationen über das Straßenumfeld bereitszustellen. Fahrzeuge stellen periodisch Statusinformationen (z. B. Position, Geschwindigkeit, Beschleunigung usw.) und/oder Ereignisinformation (Rettungseinsatz, liegen gebliebenes Fahrzeug, Stau) bereit. Diese Informationen werden in der Regel in Form von Kurzmitteilungen lokal abgesetzt. Von benachbarten Fahrzeugen kann diese ereignisbasierte Information an eine zentrale Netzwerkeinheit (Basisstation, Backend) geschickt werden.

Für V2X Direct Device-to-Device (D2D) Kommunikation gibt es derzeit zwei konkurrierende Technologien. Die erste Technologie basiert funktechnisch auf dem IEEE802.11p Standard, welcher die Basis für die übergreifenden Standards DSRC (Dedicated Short Range Communication) in den USA und ETSI ITS G5 (ETSI: European Telecommunications Standards Institute; ITS: Intelligent Transport Systems) in Europa bildet. Die zweite Technologie basiert auf 3GPP (3rd Generation Partnership Project) LTE (Long Term Evolution) und ist auch unter dem Kürzel LTE-V2X bekannt. Eine Weiterentwicklung der LTE-V2X-Technologie wird mit 5G (5th generation mobile networks) erwartet.

Der IEEE 802.11p-Standard verwendet die PHY-Schicht des IEEE 802.11a-Standards auf der Grundlage von Orthogonal Frequency Division Multiplexing (OFDM) mit einigen Modifikationen. Die MAC-Schicht basiert auf dem Enhanced Distributed Channel Access (EDCA), welcher konkurrenzbasiert ist. Des Weiteren wird Carrier Sense Multiple Access (CSMA) mit Collision Avoidance (CSMA / CA) verwendet. CSMA / CA folgt dem Listen-Before-Talk-Prinzip, um Kollisionen auf dem Kanal zu minimieren. Wenn eine Netzwerkeinheit (in diesem Zusammenhang ein Fahrzeug) Daten zu übermitteln hat, führt diese eine Kanalmessung durch, um zu überprüfen, ob der Kanal besetzt ist. Wenn der Kanal als leer wahrgenommen wird, wartet die Netzwerkeinheit mit der geplanten Übertragung eine zufallsermittelte Zeit ab und beginnt dann mit der Übertragung. Wenn der Kanal während der Kanalmessung belegt ist, so wird die Netzwerkeinheit eine Backoff-Prozedur durchführen, d. h. sie wartet mit dem nächsten Kanalzugriff eine zufallsermittelte Zeitperiode ab. Je höher die Anzahl der Netzwerkeinheiten ist, die in einem geografischen Gebiet zu senden versuchen, desto höher ist die Wahrscheinlichkeit, dass eine Netzwerkeinheit ihre Übertragung verzögert, was zu insgesamt erhöhten Verzögerungen im Netzwerk führt. Der IEEE 802.11p-Standard bietet gegenüber anderen WLAN-Standards auf Basis von IEEE 802.11 Vorteile in Bezug auf Latenz und Signalisierungsaufwand und ist auf den Anwendungsfall V2V angepasst.

Die LTE-Erweiterung für V2X ab dem 3GPP Release 14 schlägt vor, ein lizenziertes und/oder ein nicht lizenziertes Spektrum für die Kommunikation zu nutzen. Die V2V-Kommunikation basiert auf einer direkten Device-to-Device-Schnittstelle (auch als Sidelink-Schnittstelle an der physikalischen Schicht bezeichnet). Im Gegensatz zu 802.11p geschieht die Übertragung zellgestützt, d. h. durch das Netzwerk geplant durchführt. Übertragungsrechte werden von einer Scheduler-Einheit, die sich in der Basisstation befindet, erteilt, sodass Kollisionen vermieden und Störungen minimiert werden. Die Kontrolle durch die Basisstation kann nur in Bereichen durchgeführt werden, in denen das Basisstationsignal verfügbar ist (in-coverage). In einem Fall, in dem kein Basisstationssignal zur Verfügung steht (out-of-coverage), findet die Kommunikation mit vordefinierten Parametern über den Sidlink statt.

Im Zuge der Entwicklung von Kommunikationsstandards können - beispielsweise ausgehend von unterschiedlichen Anwendungen oder Entwicklungsaktivitäten aus unterschiedlichen technischen Gebieten - verschiedene Standards für denselben Frequenzbereich vorgeschlagen werden. Damit würden unterschiedliche Drahtloskommunikationssysteme im gleichen Frequenzbereich senden und es ergäben sich Leistungsverschlechterungen für beide Technologien.

DE 10 2012 216827 B3 beschreibt ein Verfahren und eine Vorrichtung zur Fahrzeugkommunikation.

Mithin könnte man eine objektive technische Aufgabe dahingehend formulieren, als dass ein Koexistenzmechanismus für die zwei unterschiedliche Drahtloskommunikationstechnologien zu schaffen ist, um auf einem gemeinsamen Frequenzbereich vorhandenen Ressourcen fair aufzuteilen.

### Offenbarung der Erfindung

Das der Erfindung zugrunde liegende Problem wird durch eine erste straßenseitige Netzwerkeinheit nach dem Anspruch 1 und ein Verfahren zum Betreiben der ersten straßenseitigen Netzwerkeinheit nach einem nebengeordneten Anspruch gelöst.

Es wird gemäß einem ersten Aspekt u.a. vorgeschlagen, dass ein erster Transceiver der ersten Netzwerkeinheit für ein erstes Drahtloskommunikationsnetzwerk dazu ausgebildet ist, Daten auf einem ersten Kanal des ersten Drahtloskommunikationsnetzwerks von einer zweiten straßenseitigen Netzwerkeinheit zu empfangen. Ein Prozessor ist dazu ausgebildet, die empfangenen Daten einem zweiten Transceiver zu einem Versand an eine dritte straßenseitige Netzwerkeinheit bereitzustellen. Der zweite Transceiver für ein zweites Drahtloskommunikationsnetzwerk ist dazu ausgebildet, die von dem Prozessor bereitgestellten Daten auf einem zweiten Kanal des zweiten Kommunikationsnetzwerks an die dritte straßenseitige Netzwerkeinheit zu versenden.

Das vorgeschlagene Verfahren umfasst gemäß einem zweiten Aspekt u.a. die folgenden Schritte: Empfangen von Daten auf einem ersten Kanal eines ersten Drahtloskommunikationsnetzwerks von einer zweiten straßenseitigen Netzwerkeinheit; Bereitstellen der empfangenen Daten zu einem Versand an eine dritte straßenseitige Netzwerkeinheit; und Versenden der bereitgestellten Daten auf einem zweiten Kanal eines zweiten Kommunikationsnetzwerks an eine dritte straßenseitige Netzwerkeinheit.

Durch die vorgeschlagene erste Netzwerkeinheit und das vorgeschlagene Verfahren werden die nachfolgend genannten Vorteile erreicht: Nachrichten können von dem ersten Drahtloskommunikationsnetzwerk in das zweite Drahtloskommunikationsnetzwerk umgesetzt und versendet werden. In einer Anfangsphase der Koexistenz beider Technologien, d. h. der beiden Drahtloskommunikationsnetzwerke wird die Verkehrssicherheit und Verkehrseffizienz verbessert, da die Verkehrssicherheit oder die Verkehrseffizienz betreffende Nachrichten in beiden Drahtlosnetzwerken verfügbar sind und damit eine höhere Durchdringung der Nachrichten erreicht wird.

Weitere Merkmale und Vorteile finden sich in der nachfolgenden Beschreibung von Ausführungsbeispielen. In der Zeichnung zeigen:
- Figur 1: ein erstes zell-basiertes Drahtloskommunikationsnetzwerk und ein zweites Drahtloskommunikationsnetzwerk;
- Figur 2: ein schematisches Blockdiagramm;
- Figur 3: ein schematisches Ablaufdiagramm; und
- Figuren 4 bis 7: jeweils ein schematisches Sequenzdiagramm.

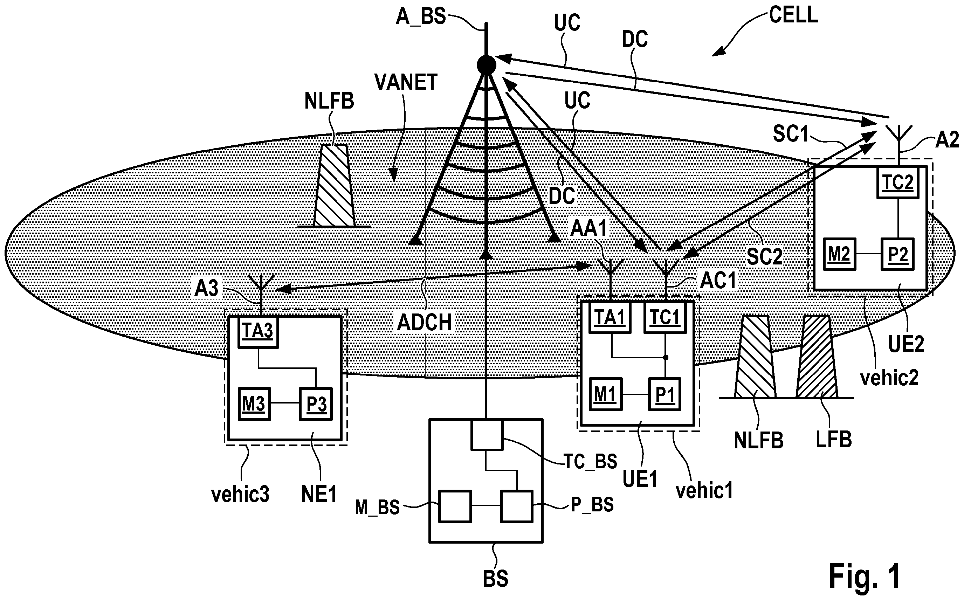

Figur 1 zeigt ein zell-basiertes Drahtloskommunikationsnetzwerk CELL und ein Adhoc-Drahtloskommunikationsnetzwerk VANET. Das zell-basierte Drahtloskommunikationsnetzwerk CELL umfasst eine netzwerkinfrastrukturseitige Netzwerkeinheit BS, eine straßenseitige Netzwerkeinheit UE1 und eine straßenseitige Netzwerkeinheit UE2. Die netzwerkinfrastrukturseitige Netzwerkeinheit BS umfasst einen Prozessor P_BS, ein Speicherelement M_BS, und einen Transceiver TC_BS. Die netzwerkinfrastrukturseitige Netzwerkeinheit BS ist auch als Basisstation oder eNodeB bezeichenbar. Die netzwerkinfrastrukturseitige Netzwerkeinheit BS ist mit einer stationären Antenne A_BS verbunden, um Daten auf einem Downlink-Kanal DC zu senden und Daten auf einem Uplink-Kanal UC zu empfangen. Die Antenne A_BS umfasst beispielsweise eine Anzahl von Antennen und ist beispielsweise als Remote Radio Head, RRH, ausgeführt. Die netzwerkinfrastrukturseitige Netzwerkeinheit BS und die Antenne A_BS stellen eine Zelle C bereit, innerhalb derer die straßenseitigen Netzwerkeinheiten UE1 und UE2 mit der Netzwerkeinheit BS kommunizieren. Selbstverständlich kann die netzwerkinfrastrukturseitige Netzwerkeinheit BS im Rahmen einer Virtualisierung auch verteilt aufgebaut sein und aus vereinzelten Netzwerkeinheiten bestehen. Die Netzwerkeinheiten BS, UE1 und UE2 sind beispielsweise nach dem LTE-V2X-Standard konfiguriert.

Die straßenseitige Netzwerkeinheit UE1 umfasst einen Prozessor P1, ein Speicherelement M1, einen Transceiver TA1 und einen Transceiver TC1. Der Transceiver TA1 ist mit einer Antenne AA1 verbunden. Der Transceiver TC1 ist mit einer Antenne AC1 verbunden. In einer Ausführungsform sind die Antennen AA1 und AC1 in nicht gezeigter Form als ein gemeinsames Antennenelement ausgeführt sein. Die straßenseitige Netzwerkeinheit UE2 umfasst einen Prozessor T2, ein Speicherelement M2, einen Transceiver TC2 und eine Antenne A2.

Die beiden straßenseitigen Netzwerkeinheiten UE1, UE2 befinden sich innerhalb der Zelle C, und sind fähig, Daten auf dem Downlink-Kanal DC zu empfangen und Daten auf dem Uplink-Kanal UC zu versenden. Die beiden straßenseitigen Netzwerkeinheiten UE1, UE2 sind fähig direkt miteinander über einen Sidelink-Kanal SC1 in einem nicht-lizenzierten Frequenzbereich NLFB und über einen Sidelink-Kanal SC2 in einem lizenzierten Frequenzbereich LFB zu kommunizieren. Selbstverständlich sind die Netzwerkeinheiten UE1, UE2 auch außerhalb der Zelle C dazu fähig, über die Sidelink-Kanäle SC1, SC2 zu kommunizieren.

In dieser Beschreibung wird auf den einzigen Uplink-Kanal UC und den einzigen Downlink-Kanal DC Bezug genommen. Beispielsweise umfasst der Uplink-Kanal UC und der Downlink-Kanal DC jeweilige Unterkanäle, d. h. es stehen mehrere Kanäle im Uplink als auch im Downlink zur Verfügung. Gleiches gilt für die Sidelink-Kanäle SC1, SC2.

Das Drahtloskommunikationsnetzwerk VANET umfasst die straßenseitige Netzwerkeinheit UE1 und eine Netzwerkeinheit NE1. Die Netzwerkeinheit NE1 umfasst einen Prozessor P3, ein Speicherelement M3, einen Transceiver TA3 und eine Antenne A3. Die Transceiver TA1 und TA3 sind beispielsweise nach dem Standard IEEE 802.11p konfiguriert. Die Netzwerkeinheiten UE1 und NE1 kommunizieren direkt miteinander über einen Adhoc-Kanal ADCH in dem nicht lizenzierten Frequenzbereich NLFB. Der Adhoc-Kanal ADCH wird über ein CSMA/CA-Protokoll (CSMA/CA: Carrier Sense Multiple Access/Collision Avoidance) von den Transceivern TA1, TA3 arbitriert.

Die Netzwerkeinheiten NE1 und UE1 befinden sich in der Nähe der Netzwerkeinheit UE2. Durch diese Nähe kann die jeweilige Sendeleistung ausreichen, sodass Übertragungen auf den Kanälen ADCH und SC1, welche im gleichen nicht lizenzierten Frequenzbereich NLFB übertragen werden, sich gegenseitig nachteilhaft beeinflussen. Ziel dieser Beschreibung ist es, diese gegenseitige nachteilhafte Beeinflussung zu reduzieren und die Durchdringung zu erhöhen, also es einer höheren Zahl an straßenseitigen Netzwerkeinheiten zu ermöglichen, Warn- und Statusnachrichten zukommen zu lassen.

Die straßenseitigen Netzwerkeinheiten UE1, UE2 und NE1 sind in jeweiligen Kraftfahrzeugen vehic1, vehic2, vehic3 angeordnet und mit einem jeweils dort angeordneten nicht gezeigten Steuergerät zum Datenaustausch verbunden. Alternativ sind die straßenseitigen Netzwerkeinheiten UE1, UE2 und NE1 Teil des Steuergeräts in dem jeweiligen Kraftfahrzeug vehic1, vehic2, vehic3 sein. In einer weiteren alternativen Ausführungsform sind die straßenseitigen Netzwerkeinheiten UE1, UE2 und NE1 anstatt in einem Kraftfahrzeug in einer feststehenden Infrastruktur wie beispielsweise einer Ampel angeordnet.

Die Sidelink-Kanäle SC1, SC2 und ein Sidelink im allgemeinen sind beispielsweise durch das Dokument 3GPP TS 36.300 V14.2.0 (2017-03) definiert, welches durch Bezugnahme in diese Beschreibung aufgenommen ist. Der Sidelink umfasst Sidelink Discovery, Sidelink-Kommunikation und V2X-Sidelink-Kommunikation zwischen den Netzwerkeinheiten UE1, UE2. Der Sidelink verwendet Uplink-Ressourcen und eine physikalische Kanalstruktur ähnlich wie die des Uplinks. Der Sidelink unterscheidet sich also vom Uplink in Bezug auf den physikalischen Kanal.

Der Sidelink ist auf einzelne Clusterübertragungen für die physikalischen Sidelink-Kanäle begrenzt. Weiterhin verwendet der Sidelink eine 1-Symbol-Lücke am Ende jedes Sidelink-Subframe. Für die V2X-Sidelink-Kommunikation werden PSCCH, Physical Sidelink Control Channel, und PSSCH, Physical Sidelink Shared Channel, im gleichen Subframe übertragen. Die Sidelink-Kanäle SC1, SC2 sind beispielsweise der PSSCH.

Die physikalische Schichtverarbeitung von Transportkanälen im Sidelink unterscheidet sich von der Uplink-Übertragung in den folgenden Schritten: Scrambling: Für PSDCH, Physical Sidelink Discovery Channel, und PSCCH ist das Scrambling nicht spezifisch für die Netzwerkeinheit; Modulation: 64 QAM und 256 QAM wird für den Sidelink nicht unterstützt (QAM: Quadrature amplitude modulation). Der PSCCH gibt Sidelink-Ressourcen und andere Übertragungsparameter an, die von der jeweiligen Netzwerkeinheit UE1, UE2 für den PSSCH verwendet werden.

Für die PSDCH-, PSCCH- und PSSCH-Demodulation werden Referenzsignale ähnlich den Uplink-Demodulationsreferenzsignalen im 4-ten Symbol des Slots im normalen CP, Cyclic Prefix, und im dritten Symbol des Slots im erweiterten CP übertragen. Die Sidelink-Demodulationsreferenzsignal-Sequenzlänge entspricht der Größe (Anzahl der Subcarrier) der zugeordneten Ressource. Für die V2X-Sidelink-Kommunikation gemäß den Kanälen SC1, SC2 werden Referenzsignale in den 3. und 6. Symbolen des ersten Slots und in den 2. und 5. Symbolen des zweiten Slots im CP übertragen. Für PSDCH und PSCCH werden Referenzsignale basierend auf einer festen Basissequenz, zyklischem Shift und orthogonalem Cover Code erzeugt. Für die V2X-Sidelink-Kommunikation wird der zyklische Shift für PSCCH zufällig bei jeder Übertragung ausgewählt.

Für Messungen des jeweiligen Sidelink-Kanals SC1, SC2 stehen auf der Seite der Netzwerkeinheiten UE1, UE2 folgende Möglichkeiten zur Verfügung: Empfangsleistung des Sidelink-Referenzsignals (S-RSRP); Empfangsleistung des Sidelink-Discovery-Referenzsignals (SD-RSRP); Empfangsleistung des PSSCH-Referenzsignals (PSSCH-RSRP); Signalstärkeindikator für Sidelink-Referenzsignale (S-RSSI).

Der Adhoc-Kanal ADCH und das Adhoc-Drahtloskommunikationsnetzwerk VANET sind beispielsweise durch den IEEE-Standard "802.11p-2010 - IEEE Standard for Information technology-- Local and metropolitan area networksSpecific requirements-- Part 11: Wireless LAN Medium Access Control (MAC) and Physical Layer (PHY) Specifications Amendment 6: Wireless Access in Vehicular Environments" definiert, welcher durch Bezugnahme in diese Beschreibung aufgenommen ist. IEEE 802.11p ist ein Standard zur Erweiterung des WLAN-Standards IEEE 802.11. Die Zielrichtung von IEEE 802.11p ist es, die WLAN-Technik in Personen-Kraftfahrzeugen zu etablieren und eine zuverlässige Schnittstelle für Anwendungen intelligenter Verkehrssysteme (engl. Intelligent Transport Systems, ITS) zu schaffen. IEEE 802.11p ist auch Basis für Dedicated Short Range Communication (DSRC) im Frequenzband von 5,85 bis 5,925 GHz. Um Verwechslungen mit der europäischen DSRC Version zu vermeiden, wird vor allem in Europa eher der Begriff ITS-G5 anstatt DSRC verwendet.

Das Dokument "ETSI EN 302 663 V1.2.0 (2012-11)", welches durch Bezugnahme in diese Beschreibung aufgenommen ist, beschreibt beiden untersten Schichten der ITS-G5-Technologie (ITS G5: Intelligent Transport Systems operating in the 5 GHz frequency band), die physikalische Schicht und die Datenverbindungsschicht. Die Transceiver TA1 und TA3 realisieren beispielsweise diese beiden untersten Schichten und korrespondierende Funktionen nach "ETSI TS 102 687 V1.1.1 (2011-07)", um den Adhoc-Kanal ADCH zu verwenden. Für die Verwendung des Adhoc -Kanals ADCH stehen in Europa die folgenden nicht lizenzierten Frequenzbereiche zur Verfügung, welche Teil des nicht-lizenzierten Frequenzbereichs NLFB sind: 1) ITS-G5A für sicherheitsrelevante Anwendungen im Frequenzbereich von 5,875 GHz bis 5,905 GHz; 2) ITS-G5B für nicht-sicherheitsrelevante Anwendungen im Frequenzbereich von 5.855 GHz bis 5.875 GHz; und 3) ITS-G5D für den Betrieb von ITS-Anwendungen im Frequenzbereich 5,905 GHz bis 5.925 GHz. ITS-G5 ermöglicht eine Kommunikation zwischen den zwei Netzwerkeinheiten UE1 und UE2 außerhalb des Kontextes einer Basisstation. ITS-G5 ermöglicht den sofortigen Austausch von Datenrahmen und vermeidet einen Management-Overhead, der bei der Einrichtung eines Netzwerks verwendet wird.

Das Dokument "ETSI TS 102 687 V1.1.1 (2011-07)", welches durch Bezugnahme in diese Beschreibung aufgenommen ist, beschreibt für ITS-G5 einen "Decentralized Congestion Control Mechanisms". Der Adhoc-Kanal ADCH dient unter anderem dem Austausch von Daten betreffend die Verkehrssicherheit und die Verkehrseffizienz. Die Transceiver TA1 und TA3 realisieren beispielsweise die Funktionen, wie sie im Dokument "ETSI TS 102 687 V1.1.1 (2011-07)" beschrieben sind. Die Anwendungen und Dienstleistungen im ITS-G5 beruhen auf dem kooperativen Verhalten der straßenseitigen Netzwerkeinheiten, die das Adhoc-Netzwerk VANET (VANET: vehicular ad hoc network) bilden. Das Adhoc-Netzwerk VANET ermöglicht zeitkritische Straßenverkehrsanwendungen, bei denen ein schneller Informationsaustausch notwendig ist, um den Fahrer und/oder das Fahrzeug rechtzeitig zu warnen und zu unterstützen. Um eine ordnungsgemäße Funktion des Adhoc-Netzwerks VANET zu gewährleisten, wird "Decentralized Congestion Control Mechanisms" (DCC) für den Adhoc-Kanal ADCH von ITS-G5 verwendet. DCC hat Funktionen, die sich auf mehreren Schichten der ITS-Architektur befinden. Die DCC-Mechanismen beruhen auf Wissen über den Kanal. Die Kanalzustandsinformation wird durch Kanal-Sondierung gewonnen. Kanalzustandsinformationen werden alternativ oder zusätzlich durch eine Beobachtung der Aktivität der Methoden TPC (transmit power control), TRC (transmit rate control) und TDC (transmit datarate control) gewonnen werden. Die Methoden ermitteln die Kanalzustandsinformation in Abhängigkeit von Empfangssignalpegelschwellen oder Präambelinformationen von detektierten Paketen.

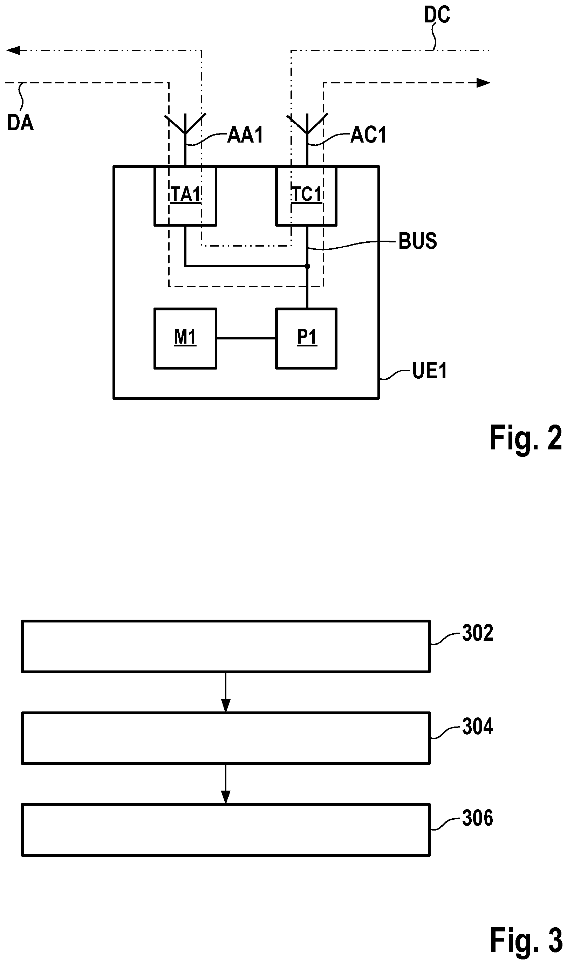

Figur 2 zeigt die straßenseitige Netzwerkeinheit UE1 in einem schematischen Blockschaltbild. Die Transceiver TA1 und TC1 sowie der Prozessor P1 sind über einen gemeinsamen Datenbus BUS verbunden. Das Speicherelement M1 ist direkt mit dem Prozessor P1 verbunden, kann selbstverständlich aber auch über den gemeinsamen Datenbus BUS angebunden sein. Auf dem Speicherelement sind die in dieser Beschreibung erläuterten Verfahren als Computerprogramm abgespeichert. Wird das auf dem Speicherelement M1 abgespeicherte Computerprogramm auf dem Prozessor P1 ausgeführt, so werden die beschriebenen Verfahren realisiert. Alternativ sind die beschriebenen Verfahren fest in dem Prozessor P1 einprogrammiert, wobei der Prozessor P1 beispielsweise in ASIC (Application-Specific Integrated Circuit) ist.

Über die Antenne AA1 und den Transceiver TA1 werden Daten DA empfangen.

Der Prozessor P1 stellt die empfangenen Daten DA dem Transceiver TC1 zu einem Versand bereit. Der Transceiver TC1 und die Antenne AC1 versenden die bereitgestellten Daten DA. Über die Antenne AC1 und den Transceiver TC1 werden Daten DC empfangen. Der Prozessor P1 stellt die Daten DC dem Transceiver TA1 zu einem Versand bereit. Der Transceiver TA1 und die Antenne AA1 versenden die bereitgestellten Daten DC.

Erfindungsgemäß werden die über einen der Transceiver TA1, TC1 empfangenen Daten DA, DC zu einem Versand über den jeweils anderen Transceiver TC1, TA1 nur dann bereitgestellt, wenn ermittelt wird, dass die empfangenen Daten DA, DC eine Verkehrssicherheit oder eine Verkehrseffizienz betreffen. Die Verkehrssicherheit oder die Verkehrseffizienz wird beispielsweise anhand eines Nachrichtentyps ermittelt. Nachrichtentypen DENM und CAM betreffen beispielsweise die Verkehrseffizienz und/oder die Verkehrssicherheit.

Nachrichten vom Typ CAM (CAM: Cooperative Awareness Message) werden in dem Dokument "ETSI EN 302 637-2 V1.3.1 (2014-09)" definiert, welches durch Bezugnahme in diese Beschreibung aufgenommen ist. Cooperative Awareness bedeutet im Straßenverkehr, dass die Verkehrsteilnehmer und die Straßenrandinfrastruktur sich gegenseitig über die eigene Position, Fahrdynamik und Eigenschaften informieren. Verkehrsteilnehmer sind alle Arten von Straßenfahrzeugen wie Autos, Lastwagen, Motorräder, Fahrräder und Fußgänger und Straßenrand-Infrastruktur einschließlich Verkehrszeichen, Ampeln oder Barrieren und Tore. CAM-Nachrichten werden in regelmäßigen Zeitabständen d. h. periodisch versendet. Eine Nachricht vom Typ CAM, welche ein Einsatzfahrzeug oder einen Stau anzeigt, dient nicht nur der Verkehrseffizienz sondern auch der Verkehrssicherheit.

Nachrichten vom Typ DENM (DENM: Decentralized Enviromental Notification Message) werden in dem Dokument "ETSI EN 302 637-3 V1.2.1 (2014-09)" definiert, welches durch Bezugnahme in diese Beschreibung aufgenommen ist. Ein DEN-Dienst (DEN: Decentralized Environmental Notification) unterstützt eine RHW-Anwendung (RHW: Road Hazard Warning). Der DEN-Dienst generiert, verwaltet und verarbeitet die Nachrichten vom Typ DENM. Eine Nachricht vom Typ DENM enthält Informationen über eine Straßengefahr oder eine anormale Verkehrslage und die jeweilige Position. Der DEN-Dienst liefert die DENM als Payload an die ITS-Netzwerk- und Transportschicht für die Nachrichtenverbreitung. Eine ITS-Anwendung verbreitet eine Nachricht vom Typ DENM an die Netzwerkeinheiten durch direkte Fahrzeug-zu-Fahrzeug- oder Fahrzeug-zu-Infrastruktur-Kommunikation auf dem Adhoc-Kanal ADCH. Auf der Empfangsseite verarbeitet der DEN-Dienst eines empfangenden ITS-S die empfangene Nachricht vom Typ DENM und liefert den DENM-Inhalt an eine Anwendung. Diese Anwendung übermittelt dem Fahrer oder dem Fahrzeug die Informationen, wenn die Informationen über die Straßenverkehrsbedingung für den Fahrer relevant sind. Der Fahrer oder das Fahrzeug ist dann in der Lage, entsprechende Maßnahmen zu ergreifen, um auf die Situation entsprechend zu reagieren.

Figur 3 zeigt ein schematisches Ablaufdiagramm. Gemäß einem Schritt 302 werden Daten, welche von einer zweiten straßenseitigen Netzwerkeinheit stammen und auf einem ersten Kanal eines ersten Drahtloskommunikationsnetzwerks von der zweiten straßenseitigen Netzwerkeinheit versendet wurden, empfangen. Gemäß einem Schritt 304 werden die empfangenen Daten zu einem Versand an eine dritte straßenseitige Netzwerkeinheit bereitgestellt. Gemäß einem Schritt 306 werden die bereitgestellten Daten auf einem zweiten Kanal eines zweiten Kommunikationsnetzwerks an die dritte Netzwerkeinheit versendet.

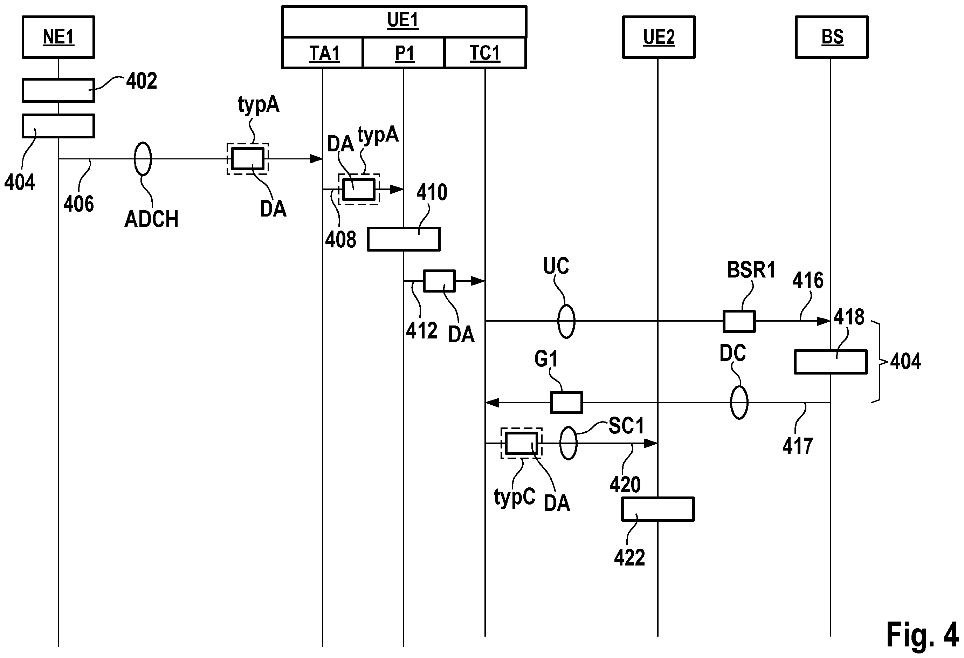

Figur 4 zeigt ein schematisches Ablaufdiagramm. Die Netzwerkeinheit NE1 ermittelt in einem Schritt 402 die Daten DA. In einem Schritt 404 findet eine Arbitrierung gemäß dem CSMA/CA-Zugriffsverfahren zum Zugriff auf den Adhoc-Kanal ADCH statt. In einem Schritt 406 werden die Daten DA in einer Nachricht des Typs typA auf dem Adhoc-Kanal ADCH versendet und mittels des Transceivers TA1 empfangen. In einem Schritt 408 stellt der Transceiver TA1 die Daten DA dem Prozessor P1 bereit. In einem Schritt 410 ermittelt der Prozessor P1, ob die empfangenen Daten DA dem Transceiver TC1 zu einem Versand an die straßenseitige Netzwerkeinheit UE2 bereitgestellt werden. Diese Entscheidung wird beispielsweise in Abhängigkeit von dem Nachrichtentyp typA getroffen. Der Nachrichtentyp typA zeigt beispielsweise an, ob die Verbreitung der Daten DA hinsichtlich der Verkehrssicherheit oder hinsichtlich der Verkehrseffizienz einen positiven Nutzen hat.

Wird nun im Schritt 410 festgestellt, dass eine Relevanz hinsichtlich der Verkehrssicherheit oder hinsichtlich der Verkehrseffizienz der Daten DA besteht, stellt der Prozessor P1 die Daten DA in einem Schritt 412 dem Transceiver TC1 zu einem Versand bereit. In einem Schritt 414 wird eine Arbitrierung des Sidelink-Kanals SC1 gestartet. Hierzu versendet der Transceiver TC1 in einem Schritt 416, welcher in einer nicht gezeigten Ausführungsform zeitlich vor dem Schritt 412 liegt, eine Scheduling-Request-Nachricht BSR1, beispielsweise einen Buffer Status Report, auf dem Uplink-Kanal UC an die netzwerkinfrastrukturseitige Netzwerkeinheit BS. Die Netzwerkeinheit BS ermittelt in einem Schritt 418 eine Scheduling-Grant-Nachricht G1 in Abhängigkeit von der Scheduling-Request-Nachricht BSR1 und versendet diese in einem Schritt 417 auf dem Downlink-Kanal DC an die Netzwerkeinheit UE1. Die Scheduling-Grant-Nachricht G1 umfasst Sidelink-Ressourcen, d. h. einen Zeit-, Frequenzort wie beispielsweise einen Physical Ressource Block, PRB und/oder ein Modulations- und Kodierungsschema (engl. Modulation and Coding Scheme, MCS) des Sidelink-Kanals SC1 , welche für den Versand der Daten DA durch die Netzwerkeinheit UE 1 reserviert sind. Auf der zugewiesenen Sidelink-Ressource des Sidelink-Kanals SC1 werden die Daten DA mittels eines Nachrichtentyps typC in einem Schritt 420 an die Netzwerkeinheit UE2 versendet. Der Nachrichtentyp typC zeigt bevorzugt an, dass die Verbreitung der Daten DA hinsichtlich der Verkehrssicherheit oder hinsichtlich der Verkehrseffizienz einen positiven Nutzen hat und deshalb durch die Netzwerkeinheit UE2 priorisiert behandelt wird. In einem Schritt 422 sorgt die Netzwerkeinheit UE2 beispielsweise dafür, dass dem Fahrzeuglenker die jeweilige Bedeutung der empfangenen Daten DA, wie beispielsweise ein liegengebliebenes Fahrzeug, ein Unfall, ein sich näherndes Einsatzfahrzeug, zur Kenntnis gebracht wird. Das Zurkenntnisbringen kann beispielsweise mittels einer entsprechenden Signalisierung im Cockpit des Fahrzeugs erfolgen.

Der Schritt 414 entfällt im out-of-coverage-Fall, d. h. im dem Fall, in dem der Sidelink-Kanal SC1 nicht gescheduled ist. Die Netzwerkeinheit UE1 arbitriert den Sidelink-Kanal SC1 dann selbstständig.

Vorteilhaft sorgt die Netzwerkeinheit UE1 dafür, dass die Daten DA, welche aus dem Drahtloskommunikationsnetzwerk VANET stammen, in das Zell-basierte Drahtloskommunikationsnetzwerk CELL umgesetzt werden. Der Einsatz der Netzwerkeinheit UE1 sorgt folglich dafür, dass die Verfügbarkeit von die Verkehrseffizienz und die Verkehrssicherheit betreffenden Daten in beiden Drahtloskommunikationsnetzwerken VANET und CELL steigt. Davon profitieren Netzwerkeinheiten UE2 und NE1, welche nur eine der beiden Netzwerktechnologien unterstützen.

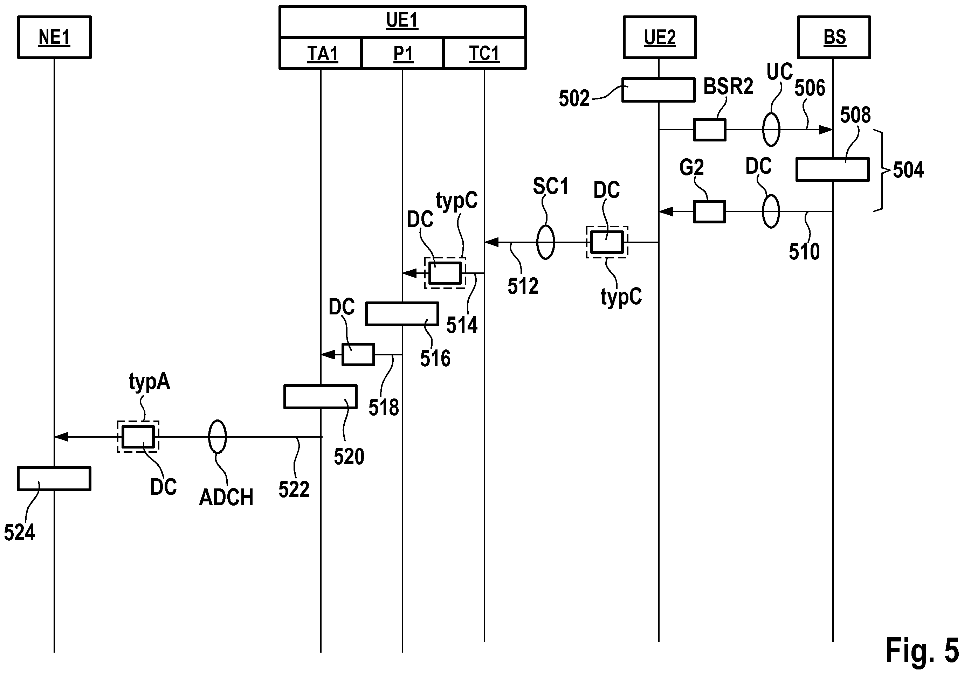

Figur 5 zeigt ein schematisches Ablaufdiagramm. In einem Schritt 502 ermittelt die Netzwerkeinheit UE2 die Daten DC. Einem Schritt 504 wird eine Arbitrierung des Sidelink-Kanals SC1 gestartet. Hierzu versendet die Netzwerkeinheit UE2 in einem Schritt 506 eine Scheduling-Request-Nachricht BSR2, beispielsweise einen Buffer Status Report, auf dem Uplink-Kanal UC an die netzwerkinfrastrukturseitige Netzwerkeinheit BS. Die Netzwerkeinheit BS ermittelten einen Schritt 508 eine Scheduling-Grant-Nachricht G2 in Abhängigkeit von der Scheduling-Request-Nachricht BSR2 und versendet die Scheduling-Grant-Nachricht G2 in einem Schritt 510 über den Downlink-Kanal DC an die Netzwerkeinheit UE2. Die Scheduling-Grant-Nachricht G2 umfasst Sidelink-Ressourcen, d. h. einen Zeit-, Frequenzort wie beispielsweise einen Physical Ressource Block, PRB, und/oder ein Modulations- und Kodierungsschema (engl. Modulation and Coding Scheme, MCS), des Sidelink-Kanals SC1, welche für den Versand der Daten DC durch die Netzwerkeinheit UE2 reserviert sind. Auf der zugewiesenen Sidelink-Ressource des Sidelink-Kanals SC1 werden die Daten DC mittels des Nachrichtentyps typC in einem Schritt 512 an die Netzwerkeinheit UE1 versendet und von dem Transceiver TC1 der Netzwerkeinheit UE1 empfangen. Der Transceiver TC1 stellt die Daten DC in einem Schritt 514 dem Prozessor P1 bereit. Der Prozessor P1 überprüft in einem Schritt 516, ob die Daten DC für die Verkehrssicherheit oder die Verkehrseffizienz relevant sind. Ist dies der Fall, so stellt der Prozessor P1 die Daten DC in einem Schritt 518 dem Transceiver TA1 bereit, um die Daten DC in das Drahtloskommunikationsnetzwerk VANET zu versenden, d. h. umzusetzen. Im Schritt 520 startet der Transceiver TA1 eine Arbitrierung des Adhoc-Kanals ADCH. In einem Schritt 522 werden die Daten DC auf dem Adhoc-Kanal ADCH an die Netzwerkeinheit NE1 versendet. Hierzu wird beispielsweise der Nachrichtentyp typA verwendet. Im Schritt 522 werden die Daten DC an alle benachbarten Netzwerkeinheiten des Adhoc-Drahtloskommunikationsnetzwerks VANET gesendet, d. h. ein Broadcast-Vorgang findet für die Daten DC statt. Der Nachrichtentyp typA und/oder typC umfasst beispielsweise die Typen CAM und DENM.

In einem Schritt 524 sorgt die Netzwerkeinheit NE1 beispielsweise dafür, dass dem Fahrzeuglenker des zugehörigen Kraftfahrzeugs die jeweilige Bedeutung der empfangenen Daten DC, wie beispielsweise ein liegengebliebenes Fahrzeug, ein Unfall, ein sich näherndes Einsatzfahrzeug, zur Kenntnis gebracht wird. Das Zurkenntnisbringen kann beispielsweise mittels einer entsprechenden Signalisierung im Cockpit des Fahrzeugs erfolgen.

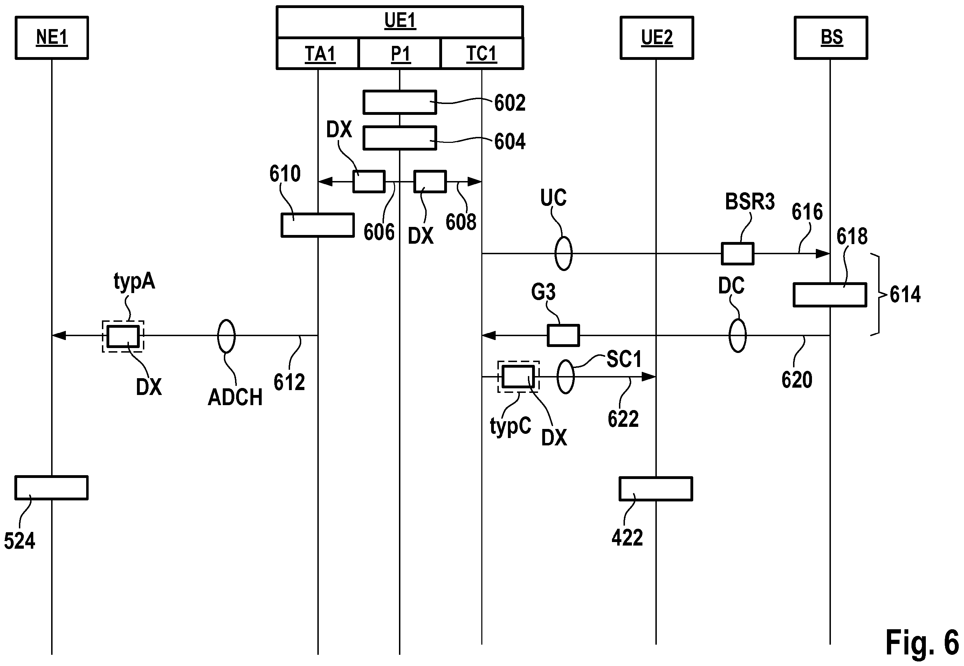

Figur 6 zeigt ein schematisches Ablaufdiagramm. Im Schritt 602 werden Daten DX ermittelt. Diese selbstständige Ermittlung der Daten DX umfasst beispielsweise das Ermitteln eines Stauendes oder das Ermitteln, dass das der Netzwerkeinheit UE1 zugehörige Kraftfahrzeug aufgrund eines Defekts liegen geblieben ist. In dem Schritt 604 wird überprüft, ob die Daten DX verkehrssicherheitsrelevant sind. Ist dies der Fall, so werden die Daten DX in Schritten 606 und 608 den jeweiligen Transceiver TA1 und TC1 zum jeweiligen Versand bereitgestellt. In einem Schritt 610 startet der Transceiver TA1 eine Arbitrierung des Adhoc-Kanals ADCH und versendet in einem Schritt 612 die Daten DX gemäß dem Nachrichtentyp typA im Broadcast-Verfahren. Im Schritt 612 werden die Daten DX an alle benachbarten Netzwerkeinheiten des Adhoc-Drahtloskommunikationsnetzwerks VANET gesendet, d. h. ein Broadcast-Vorgang findet für die Daten DX statt. Zum Schritt 524 wird auf die Ausführungen der Figur 5 verwiesen.

In einem Schritt 614 wird eine Arbitrierung des Sidelink-Kanals SC1 durchgeführt. Hierzu versendet der Transceiver TC1 in einem Schritt 616 eine Scheduling-Request-Nachricht BSR3, beispielsweise einen Buffer Status Report, auf dem Uplink-Kanal UC an die netzwerkinfrastrukturseitige Netzwerkeinheit BS. Die Netzwerkeinheit BS ermittelt in einen Schritt 618 eine Scheduling-Grant-Nachricht G3 in Abhängigkeit von der Scheduling-Request-Nachricht BSR3 und versendet diese in einem Schritt 620 auf dem Downlink-Kanal DC an die Netzwerkeinheit UE1. Die Scheduling-Grant-Nachricht G3 umfasst eine Sidelink-Ressource, d. h. einen Zeit-, Frequenzort wie beispielsweise einen Physical Ressource Block, PRB und/oder ein Modulations- und Kodierungsschema (engl. Modulation and Coding Scheme, MCS), des Sidelink-Kanals SC1, welche für den Versand der Daten DA durch die Netzwerkeinheit UE1 reserviert ist. Auf der zugewiesenen Sidelink-Ressource des Sidelink-Kanals SC1 werden die Daten DX mittels eines Nachrichtentyps typC in einem Schritt 622 an die Netzwerkeinheit UE2 versendet. Zum Schritt 422 wird auf die Ausführungen der Figur 4 verwiesen.

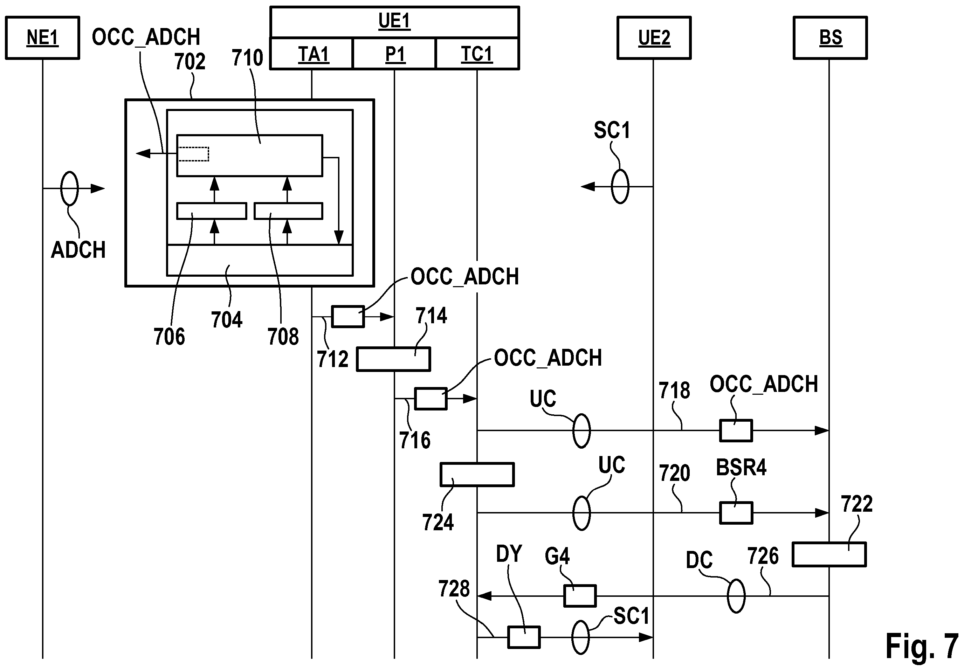

Figur 7 zeigt ein schematisches Ablaufdiagramm. In einem Schritt 702 wird eine Belegungsinformation OCC_ADCH des Adhoc-Kanals ADCH ermittelt. Die Belegungsinformation kann auch als Kanalzustandsinformation bezeichnet werden. Ein der Sicherungsschicht und/oder der physikalischen Schicht zugehöriger Block 704 führt die Arbitrierung des Adhoc-Kanals ADCH durch. Der Adhoc-Kanal ADCH wird durch weitere Netzwerkeinheiten genutzt. Zusätzlich kann Datenverkehr auf dem Sidelink-Kanal SC1, welcher sich mit dem Adhoc-Kanal ADCH das nicht-lizenzierte Frequenzband teilt, zu einer verringerten Verfügbarkeit des Adhoc-Kanals ADCH führen. Ein Block 706 führt eine Prüfung des Adhoc-Kanals ADCH durch, was beispielsweise die Messung einer Empfangsleistung oder ein Ermitteln eines Belegungsstatus umfasst. Ein Block 708 ermittelt Statistiken über die versendeten Daten. Die vorgenannte Messung und die vorgenannten Statistiken werden gemeinsam oder separat als die Belegungsinformation OCC_ADCH von einem Block 710 ermittelt. Der Block 710 ist des Weiteren zur Kontrolle des Blocks 704 ausgebildet und kann beispielsweise Parameter des Blocks 704 verändern, um die Übermittlungswahrscheinlichkeit zu erhöhen.

In einem Schritt 712 wird die Belegungsinformation OCC_ADCH dem Prozessor P1 bereitgestellt. In einem Schritt 714 wird entschieden, ob die bereitgestellte Belegungsinformation OCC_ADCH an die netzwerkinfrastrukturseitige Netzwerkeinheit BS übermittelt wird. Beispielsweise kann die Übertragung der Belegungsinformation OCC_ADCH zyklisch erfolgen. In einem anderen Beispiel wird die Belegungsinformation OCC_ADCH nur dann an die Netzwerkeinheit BS übertragen, wenn die Belegungsinformation OCC_ADCH einen Schwellenwert überschreitet, d. h. wenn die Belegungsinformation OCC_ADCH eine erhöhte Belegung des Adhoc-Kanals ADCH anzeigt. Einem Schritt 716 wird die Belegungsinformation OCC_ADCH dem Transceiver TC1 bereitgestellt, um an die Netzwerkeinheit BS versandt zu werden. Über den Uplink-Kanal UC versendet der Transceiver TC1 die Belegungsinformation OCC_ADCH in einem Schritt 718. Vorliegend ist kein Arbitrierungsvorgang gezeigt, da eine Uplink-Ressource auf dem Uplink-Kanal-Kanal UC zum Versenden der Belegungsinformation OCC_ADCH vorgesehen ist, welche durch die Netzwerkeinheit BS ohne Arbitrierung reserviert wird, beispielsweise in einem Uplink-Kontrollkanal. Alternativ wird zuvor eine nicht gezeigte Arbitrierung des Uplink-Kanals UC durchgeführt.

Erhält die Netzwerkeinheit BS in einem Schritt 720 eine Scheduling-Request-Nachricht BSR4, so wird im Schritt 722 in Abhängigkeit von der Belegungsinformation OCC_ADCH und in Abhängigkeit von der Scheduling-Request-Nachricht BSR4 entschieden, welche Sidelink-Ressourcen auf dem Sidelink-Kanal SC 1 der Netzwerkeinheit UE1 zum Versand von in einem Schritt 724 ermittelten Daten DY zugeteilt werden. Vorteilhaft wird dadurch in dem zellbasierten Drahtloskommunikationsnetzwerk die Belegungsinformationen OCC_ADCH aus dem Adhoc-Drahtloskommunikationsnetzwerk genutzt, um eine Scheduling-Entscheidung zu treffen. In einem Schritt 726 wird die entsprechende Scheduling-Grant-Nachricht G4 an die Netzwerkeinheit UE1 versendet. Die Netzwerkeinheit UE1 versendeten einem Schritt 728 die ermittelten Daten DY an die Netzwerkeinheit UE2. Vorteilhaft wird so die lokal ermittelte Belegungsinformation OCC_ADCH der Netzwerkeinheit BS zugeführt, um unter Berücksichtigung der lokalen Belegung des nicht lizenzierten Frequenzbereichs die Scheduling-Entscheidung durch die Netzwerkeinheit BS zu verbessern.

Im Schritt 722 wird in einer Ausführungsform in Abhängigkeit von der Belegungsinformation OCC_ADCH ermittelt, dass der Sidelink-Kanal SC1 zu stark belegt ist, womit im Schritt 722 Sidelink-Ressourcen für den Sidelink-Kanal SC2 im lizenzierten Frequenzbereich reserviert werden und diese reservierten Sidelink-Ressourcen mittels der Scheduling-Grant-Nachricht G4 an die Netzwerkeinheit UE1 signalisiert werden. Im Schritt 728 werden die Daten DY dann in nicht gezeigter Form auf dem Sidelink-Kanal SC2 versendet.

## Patentansprüche

1. Eine erste straßenseitige Netzwerkeinheit (UE1) umfassend:
- einen ersten Transceiver (TA1; TC1) für ein erstes Drahtloskommunikationsnetzwerk, welcher dazu ausgebildet ist, Daten (DA; DC) auf einem ersten Kanal des ersten Drahtloskommunikationsnetzwerks von einer zweiten straßenseitigen Netzwerkeinheit (NE1; UE2) zu empfangen (302);
- einen Prozessor (P1), welcher dazu ausgebildet ist, die empfangenen Daten (DA; DC) einem zweiten Transceiver (TC1; TA1) zu einem Versand an eine dritte straßenseitige Netzwerkeinheit (UE2; NE1) bereitzustellen; und
- den zweiten Transceiver (TC1; TA1) für ein zweites Drahtloskommunikationsnetzwerk, welcher dazu ausgebildet ist, die von dem Prozessor (P1) bereitgestellten Daten (DA; DC) auf einem zweiten Kanal des zweiten Kommunikationsnetzwerks an die dritte straßenseitige Netzwerkeinheit (UE2; NE1) zu versenden, - wobei der Prozessor (P1) dazu ausgebildet ist, zu ermitteln (410; 516), ob die von dem ersten Transceiver (TA1; TC1) empfangenen Daten (DA; DC) eine Verkehrssicherheit oder eine Verkehrseffizienz betreffen, und die Daten (DA; DC) dem zweiten Transceiver (TA1; TC1) nur dann bereitzustellen (412; 518), wenn die Daten (DA; DC) die Verkehrssicherheit oder die Verkehrseffizienz betreffen.

2. Die straßenseitige Netzwerkeinheit (UE1) nach dem Anspruch 1,
- wobei der Prozessor (P) und/oder der erste Transceiver (TA1) dazu ausgebildet sind, eine lokale Belegungsinformation in dem ersten Drahtloskommunikationsnetzwerk zu ermitteln (702), und
- wobei der Prozessor (P) dazu ausgebildet ist, die lokale Belegungsinformation dem zweiten Transceiver (TC1) zum Versand an eine netzwerkinfrastrukturseitige Netzwerkeinheit (BS) bereitzustellen (716); und
- wobei der zweite Transceiver (TC1) dazu ausgebildet ist, die Belegungsinformation an die netzwerkinfrastrukturseitige Netzwerkeinheit (BS) auf einem Uplink-Kanal (UC) zu versenden.

3. Die straßenseitige Netzwerkeinheit (UE) nach einem der vorigen Ansprüche,
- wobei der Prozessor (P1) dazu ausgebildet ist,
- selbst Daten (DX) zu ermitteln,
- zu ermitteln, ob die selbst ermittelten Daten (DX) die Verkehrssicherheit oder die Verkehrseffizienz betreffen,
- die selbst ermittelten Daten (DX) dem ersten Transceiver (TA1; TC1) bereitzustellen, wenn die selbst ermittelten Daten (DX) die Verkehrssicherheit oder die Verkehrseffizienz betreffen, und
- die selbst ermittelten Daten (DX) dem zweiten Transceiver (TC1; TA1) bereitzustellen, wenn die selbst ermittelten Daten (DX) die Verkehrssicherheit oder die Verkehrseffizienz betreffen;
- wobei der erste Transceiver (TA1; TC1) dazu ausgebildet ist, die selbst ermittelten Daten (DX) auf dem ersten Kanal des ersten Drahtloskommunikationsnetzwerks zu versenden; und
- wobei der zweite Transceiver (TC1; TA1) dazu ausgebildet ist, die selbst ermittelten Daten (DX) auf dem zweiten Kanal des zweiten Drahtloskommunikationsnetzwerks zu versenden

4. Die straßenseitige Netzwerkeinheit (UE1) nach einem der vorigen Ansprüche, wobei die empfangenen Daten (DA; DC) und/oder die selbst ermittelten Daten (DX) Teil einer Decentralized Enviromental Notification Message, DENM, nach ETSI EN 302 637-3 sind.

5. Die straßenseitige Netzwerkeinheit (UE1) nach einem der vorigen Ansprüche, wobei die empfangenen Daten (DA; DC) und/oder die selbst ermittelten Daten (DX) Teil einer Cooperate Awareness Message, CAM, nach ETSI EN 302 637-2 sind.

6. Die straßenseitige Netzwerkeinheit (UE1) nach einem der vorstehenden Ansprüche, wobei der erste und der zweite Kanal in dem gleichen nicht-lizenzierten Frequenzbereich übertragen werden

7. Die straßenseitige Netzwerkeinheit (UE1) nach dem Anspruch 6, wobei der erste Kanal ein Adhoc-Kanal ist, wobei das erste Drahtloskommunikationsnetzwerk ein Adhoc-Drahtloskommunikationsnetzwerk ist, wobei der zweite Kanal ein Sidelink-Kanal ist, und wobei das zweite Drahtloskommunikationsnetzwerk ein zell-basiertes Drahtlosnetzwerk ist.

8. Die straßenseitige Netzwerkeinheit (UE1) nach dem Anspruch 6, wobei der zweite Kanal ein Adhoc-Kanal ist, wobei das zweite Drahtloskommunikationsnetzwerk ein Adhoc-Drahtloskommunikationsnetzwerk ist, wobei der erste Kanal ein Sidelink-Kanal ist, und wobei das erste Drahtloskommunikationsnetzwerk ein zell-basiertes Drahtloskommunikationsnetzwerk ist

9. Die straßenseitige Netzwerkeinheit (UE1) nach einem der Ansprüche 1 bis 5, wobei der erste Kanal in einem nicht-lizenzierten Frequenzbereich übertragen wird, und wobei der zweite Kanal in einem lizenzierten Frequenzbereich übertragen wird.

10. Die straßenseitige Netzwerkeinheit (UE1) nach dem Anspruch 9, wobei der erste Kanal ein Adhoc-Kanal ist, wobei das erste Drahtloskommunikationsnetzwerk ein Adhoc-Drahtloskommunikationsnetzwerk ist, wobei der zweite Kanal ein Sidelink-Kanal ist, und wobei das zweite Drahtloskommunikationsnetzwerk ein zell-basiertes Drahtlosnetzwerk ist

11. Ein Kraftfahrzeug (vehic1) umfassend die straßenseitige Netzwerkeinheit (UE1) nach einem der vorstehenden Ansprüche.

12. Ein Verfahren zum Betreiben einer ersten straßenseitige Netzwerkeinheit (UE1), das Verfahren umfassend:
- Empfangen (302) von Daten (DA; DC) auf einem ersten Kanal eines ersten Drahtloskommunikationsnetzwerks von einer zweiten straßenseitigen Netzwerkeinheit (NE1; UE2);
- Bereitstellen (304) der empfangenen Daten (DA; DC) zu einem Versand an eine dritte straßenseitige Netzwerkeinheit (UE2; NE1);
- Versenden (306) der bereitgestellten Daten (DA; DC) auf einem zweiten Kanal eines zweiten Kommunikationsnetzwerks an eine dritte straßenseitige Netzwerkeinheit (UE2; NE1), wobei der Prozessor (P1) ermittelt (410; 516), ob die von dem ersten Transceiver (TA1; TC1) empfangenen Daten (DA; DC) eine Verkehrssicherheit oder eine Verkehrseffizienz betreffen, und die Daten (DA; DC) dem zweiten Transceiver (TA1; TC1) nur dann bereitstellt (412; 518), wenn die Daten (DA; DC) die Verkehrssicherheit oder die Verkehrseffizienz betreffen.

13. Das Verfahren nach dem Anspruch 12, welches zur Ausführung auf einer Netzwerkeinheit nach einem der Ansprüche 2 bis 10 ausgebildet ist.

## Claims

1. First roadside network unit (UE1) comprising:
- a first transceiver (TA1; TC1) for a first wireless communication network, designed to receive (302) data (DA; DC) from a second roadside network unit (NE1; UE2) on a first channel of the first wireless communication network;
- a processor (P1), designed to deliver the received data (DA; DC) to a second transceiver (TC1; TA1) for dispatch to a third roadside network unit (UE2; NE1); and
- the second transceiver (TC1; TA1) for a second wireless communication network, designed to send the data (DA; DC) delivered by the processor (P1) to the third roadside network unit (UE2; NE1) on a second channel of the second communication network, - the processor (P1) being designed to determine (410; 516) whether the data (DA; DC) received by the first transceiver (TA1; TC1) relate to a road safety or a traffic efficiency, and to deliver (412; 518) the data (DA; DC) to the second transceiver (TA1; TC1) only if the data (DA; DC) relate to the road safety or the traffic efficiency.

2. Roadside network unit (UE1) according to Claim 1,
- wherein the processor (P) and/or the first transceiver (TA1) are designed to determine (702) local occupancy information in the first wireless communication network, and
- wherein the processor (P) is designed to deliver (716) the local occupancy information to the second transceiver (TC1) for dispatch to a network-infrastructure-side network unit (BS); and
- wherein the second transceiver (TC1) is designed to send the occupancy information to the network-infrastructure-side network unit (BS) on an uplink channel (UC).

3. Roadside network unit (UE) according to either of the preceding claims,
- wherein the processor (P1) is designed
- to independently determine data (DX),
- to determine whether the independently determined data (DX) relate to the road safety or the traffic efficiency,
- to deliver the independently determined data (DX) to the first transceiver (TA1; TC1) if the independently determined data (DX) relate to the road safety or the traffic efficiency, and
- to deliver the independently determined data (DX) to the second transceiver (TC1; TA1) if the independently determined data (DX) relate to the road safety or the traffic efficiency;
- wherein the first transceiver (TA1; TC1) is designed to send the independently determined data (DX) on the first channel of the first wireless communication network; and
- wherein the second transceiver (TC1; TA1) is designed to send the independently determined data (DX) on the second channel of the second wireless communication network.

4. Roadside network unit (UE1) according to one of the preceding claims, wherein the received data (DA; DC) and/or the independently determined data (DX) are part of a Decentralized Environmental Notification Message, DENM, based on ETSI EN 302 637-3.

5. Roadside network unit (UE1) according to one of the preceding claims, wherein the received data (DA; DC) and/or the independently determined data (DX) are part of a Cooperate Awareness Message, CAM, based on ETSI EN 302 637-2.

6. Roadside network unit (UE1) according to one of the preceding claims, wherein the first and second channels are transmitted in the same unlicensed frequency range.

7. Roadside network unit (UE1) according to Claim 6, wherein the first channel is an ad hoc channel, wherein the first wireless communication network is an ad hoc wireless communication network, wherein the second channel is a sidelink channel, and wherein the second wireless communication network is a cell-based wireless network.

8. Roadside network unit (UE1) according to Claim 6, wherein the second channel is an ad hoc channel, wherein the second wireless communication network is an ad hoc wireless communication network, wherein the first channel is a sidelink channel, and wherein the first wireless communication network is a cell-based wireless communication network.

9. Roadside network unit (UE1) according to one of Claims 1 to 5, wherein the first channel is transmitted in an unlicensed frequency range, and wherein the second channel is transmitted in a licensed frequency range.

10. Roadside network unit (UE1) according to Claim 9, wherein the first channel is an ad hoc channel, wherein the first wireless communication network is an ad hoc wireless communication network, wherein the second channel is a sidelink channel, and wherein the second wireless communication network is a cell-based wireless network.

11. Motor vehicle (vehic1) comprising the roadside network unit (UE1) according to one of the preceding claims.

12. Method for operating a first roadside network unit (UE1), the method comprising:
- receiving (302) data (DA; DC) from a second roadside network unit (NE1; UE2) on a first channel of a first wireless communication network;
- delivering (304) the received data (DA; DC) for dispatch to a third roadside network unit (UE2; NE1);
- sending (306) the delivered data (DA; DC) to a third roadside network unit (UE2; NE1) on a second channel of a second communication network, the processor (P1) determining (410; 516) whether the data (DA; DC) received by the first transceiver (TA1; TC1) relate to a road safety or a traffic efficiency, and delivering (412; 518) the data (DA; DC) to the second transceiver (TA1; TC1) only if the data (DA; DC) relate to the road safety or the traffic efficiency.

13. Method according to Claim 12, designed for performance on a network unit according to one of Claims 2 to 10.

## Revendications

1. Première unité de réseau côté route (UE1), comprenant :
- un premier émetteur-récepteur (TA1 ; TC1) pour un premier réseau de communication sans fil, lequel est configuré pour recevoir (302) des données (DA ; DC) sur un premier canal du premier réseau de communication sans fil en provenance d'une deuxième unité de réseau côté route (NE1 ; UE2) ;
- un processeur (P1), qui est configuré pour fournir les données reçues (DA ; DC) à un deuxième émetteur-récepteur (TC1 ; TA1) en, vue d'un envoi à une troisième unité de réseau côté route (UE2 ; NE1) ; et
- le deuxième émetteur-récepteur (TC1 ; TA1) pour un deuxième réseau de communication sans fil, qui est configuré pour envoyer les données (DA ; DC) fournies par le processeur (P1) sur un deuxième canal du deuxième réseau de communication à la troisième unité de réseau côté route (UE2 ; NE1),
- le processeur (P1) étant configuré pour déterminer (410 ; 516) si les données (DA ; DC) reçues en provenance du premier émetteur-récepteur (TA1 ; TC1) concernent une sécurité du trafic ou une efficacité du trafic, et fournir (412 ; 518) les données (DA ; DC) au deuxième émetteur-récepteur (TA1 ; TC1) uniquement si les données (DA ; DC) concernent la sécurité du trafic ou l'efficacité du trafic.

2. Unité de réseau côté route (UE1) selon la revendication 1,
- le processeur (P) et/ou le premier émetteur-récepteur (TA1) étant configuré(s) pour déterminer (702) une information d'occupation locale dans le premier réseau de communication sans fil, et
- le processeur (P) étant configuré pour fournir (716) les informations d'occupation locale au deuxième émetteur-récepteur (TC1) en vue d'un envoi à une unité de réseau côté infrastructure de réseau (BS) ; et
- le deuxième émetteur-récepteur (TC1) étant configuré pour envoyer les informations d'occupation à l'unité de réseau côté infrastructure de réseau (BS) sur un canal de liaison montante (UC).

3. Unité de réseau côté route (UE) selon l'une des revendications précédentes,
- le processeur (P1) étant configuré pour,
- déterminer lui-même des données (DX),
- déterminer si les données auto-déterminées (DX) concernent la sécurité du trafic ou l'efficacité du trafic,
- fournir les données auto-déterminées (DX) au premier émetteur-récepteur (TA1 ; TC1) lorsque les données auto-déterminées (DX) concernent la sécurité du trafic ou l'efficacité du trafic, et
- fournir les données auto-déterminées (DX) au deuxième émetteur-récepteur (TC1 ; TA1) lorsque les données auto-déterminées (DX) concernent la sécurité du trafic ou l'efficacité du trafic ;
- le premier émetteur-récepteur (TA1 ; TC1) étant configuré pour envoyer les données auto-déterminées (DX) sur le premier canal du premier réseau de communication sans fil ; et
- le deuxième émetteur-récepteur (TC1 ; TA1) étant configuré pour envoyer les données auto-déterminées (DX) sur le deuxième canal du deuxième réseau de communication sans fil.

4. Unité de réseau côté route (UE1) selon l'une des revendications précédentes, les données reçues (DA ; DC) et/ou les données auto-déterminées (DX) faisant partie d'un message de notification environnementale décentralisée (Decentralized Environmental Notification Message), DENM, selon l'ETSI EN 302 637-3.

5. Unité de réseau côté route (UE1) selon l'une des revendications précédentes, les données reçues (DA ; DC) et/ou les données auto-déterminées (DX) faisant partie d'un message de sensibilisation à la coopération (Cooperate Awareness Message), CAM, selon l'ETSI EN 302 637-2.

6. Unité de réseau côté route (UE1) selon l'une des revendications précédentes, les premier et deuxième canaux étant transmis dans la même plage de fréquences non soumise à licence.

7. Unité de réseau côté route (UE1) selon la revendication 6, le premier canal étant un canal ad hoc, le premier réseau de communication sans fil étant un réseau de communication sans fil ad hoc, le deuxième canal étant un canal de liaison latérale et le deuxième réseau de communication sans fil étant un réseau sans fil basé sur des cellules.

8. Unité de réseau côté route (UE1) selon la revendication 6, le deuxième canal étant un canal ad hoc, le deuxième réseau de communication sans fil étant un réseau de communication sans fil ad hoc, le premier canal étant un canal de liaison latérale et le premier réseau de communication sans fil étant un réseau de communication sans fil sans fil basé sur des cellules.

9. Unité de réseau côté route (UE1) selon l'une des revendications 1 à 5, le premier canal étant transmis dans une plage de fréquences non soumise à licence, et le deuxième canal étant transmis dans une plage de fréquences soumise à licence.

10. Unité de réseau côté route (UE1) selon la revendication 9, le premier canal étant un canal ad hoc, le premier réseau de communication sans fil étant un réseau de communication sans fil ad hoc, le deuxième canal étant un canal de liaison latérale et le deuxième réseau de communication sans fil étant un réseau sans fil basé sur des cellules.

11. Véhicule automobile (vehic1) comprenant l'unité de réseau côté route (UE1) selon l'une des revendications précédentes.

12. Procédé pour faire fonctionner une première unité de réseau côté route (UE1), le procédé comprenant :
- la réception (302) de données (DA ; DC) sur un premier canal d'un premier réseau de communication sans fil en provenance d'une deuxième unité de réseau côté route (NE1 ; UE2) ;
- la fourniture (304) des données reçues (DA ; DC) en vue d'un envoi à une troisième unité de réseau côté route (UE2 ; NE1) ;
- l'envoi (306) des données (DA ; DC) fournies sur un deuxième canal d'un deuxième réseau de communication à une troisième unité de réseau côté route (UE2 ; NE1), le processeur (P1) déterminant (410 ; 516) si les données (DA ; DC) reçues en provenance du premier émetteur-récepteur (TA1 ; TC1) concernent une sécurité du trafic ou une efficacité du trafic, et fournissant (412 ; 518) les données (DA ; DC) au deuxième émetteur-récepteur (TA1 ; TC1) uniquement si les données (DA ; DC) concernent la sécurité du trafic ou l'efficacité du trafic.

13. Procédé selon la revendication 12, lequel est configuré pour être mis en œuvre sur une unité de réseau selon l'une des revendications 2 à 10.
